# EUROPÄISCHE PATENTANMELDUNG

(11) **EP 0 908 607 A2**
(43) Veröffentlichungstag der Anmeldung: **14.04.1999**
(21) Anmeldenummer: 98116506.1
(22) Anmeldetag: 01.09.1998
(51) Int. Cl.: F01N 7/00

(54) **Verfahren zur Überwachung der Funktionsfähigkeit eines Katalysators**

(30) Priorität: 11.10.1997 DE 19745039
(71) Anmelder: Heraeus Electro-Nite International N.V., 3530 Houthalen (BE)
(72) Erfinder: Wienand, Karlheinz, Dr., 63741 Aschaffenburg (DE); Griffin, Joseph R., Fenton, Michigan 48430 (US)
(74) Vertreter: Kühn, Hans-Christian

(57) **Zusammenfassung**

Die Erfindung betrifft ein Verfahren zur Überwachung der Funktionsfähigkeit eines Katalysators für die Abgasreinigung einer durch einen Lambda-Sensor geregelten Verbrennungsanlage durch Temperaturmessung mit einem eine katalytisch aktive Beschichtung aufweisenden Wärmetönungssensor. Das Verfahren gibt Aufschluß sowohl über den Anteil einzelner, nicht umgesetzter Abgasbestandteile als auch über die aktuelle thermische Belastung des Katalysators. Die Meßwerte des Wärmetönungssensors werden in zeitlichen Abständen, die der üblichen Regelfrequenz des Lambda-Sensors entspricht, erfaßt. Es ergibt sich dabei eine Rechteckfunktion, wobei die Höhe der Amplitude ein für den Anteil von nicht umgesetzten einzelnen Abgasbestandteilen ist. Durch Gleichrichtung der Rechteckfunktion kann auf die mittlere Temperatur des Katalysators geschlossen werden.

## Beschreibung

Die Erfindung betrifft ein Verfahren zur Überwachung der Funktionsfähigkeit eines Katalysators für die Abgasreinigung einer durch einen Lambda-Sensor geregelten Verbrennungsanlage durch Temperaturmessung mit einem eine katalytisch aktive Beschichtung aufweisenden Wärmetönungssensor, wobei die Abgase an der katalytisch aktiven Beschichtung eine mit Wärmeentwicklung verbundene Umsetzung erfahren.

Aus DE 37 20 684 A1 ist ein gattungsgemäßes Verfahren bekannt, bei dem die bei der Nachverbrennung der unverbrannten Kraftstoffbestandteile im Rohabgas anfallende Verbrennungsenthalpie gemessen wird. Ein Lambda-Sensor ist hinter der beheizten Katalysatoreinheit angeordnet und mit der Heizungsregelung des Katalysators gekoppelt. Eine Referenz-Heizleistung bei Durchfluß von Luft wird in Beziehung gesetzt zu der durch die entsprechende Wärmetönung bei der Umsetzung von brennbaren Abgasbestandteilen in der Katalysatoreinheit verminderten Heizleistung. Durch das Verfahren wird einerseits der Gesamtanteil an unverbrannten Bestandteilen im Abgas ermittelt, während auf die Temperatur des Katalysators nur indirekt über die Heizleistung geschlossen werden kann. Mit Hilfe des Lambda-Sensors wird außerdem das Luft-Kraftstoffverhältnis bestimmt. Durch dieses Verfahren kann das Verbrennungsverhalten des Motors charakterisiert wird.

Weiterhin ist aus DE 40 20 383 A1 ein Verfahren zum Schutz von Katalysatoren für die Abgasreinigung bekannt, bei dem ein Wärmetönungssensor zur Anwendung kommt, der im Abgasstrom vor dem Katalysator angeordnet ist. Der Wärmetönungssensor besteht aus einem resistiven Temperaturfühler mit katalytisch aktiver Beschichtung. An diesem Wärmetönungssensor laufen die gleichen exothermen Reaktionen wie im nachgeschalteten Katalysator ab, so daß daraus auf den Anteil von unverbrannten Abgasbestandteilen geschlossen werden kann. Über einen zweiten Temperaturfühler ohne katalytisch aktive Beschichtung kann die Temperatur des Abgases oder des Katalysators erfaßt werden. Eine selektive Erfassung einzelner Abgaskomponenten ist mit dem Verfahren nach DE 40 20 383 A1 nicht möglich.

Der vorliegenden Erfindung liegt die Aufgabe zugrunde, ein Verfahren zur Überwachung der Funktionsfähigkeit eines Katalysators anzugeben, das Aufschluß sowohl über den Anteil einzelner, nichtumgesetzter Abgasbestandteile als auch über die aktuelle thermische Belastung des Katalysators gibt.

Erfindungsgemäß wird die vorgenannte Aufgabe dadurch gelöst, daß abwechselnd erst die Meßwerte des Wärmetönungssensors, der im Abgasstrom im Einströmbereich der Katalysatoreinheit angeordnet ist und die gleiche katalytisch aktive Beschichtung aufweist wie die Katalysatoreinheit, in Zeitabständen entsprechend der Regelfrequenz des Lambda-Sensors aufgenommen werden, - wodurch sich eine eine Amplitude aufweisende Rechteckfunktion über der Zeitachse ergibt, wobei die Höhe der Amplitude ein Maß für den Anteil von nichtumgesetzten Kohlenwasserstoffen, Kohlenmonoxid und Wasserstoff im Abgas ist -, und anschließend diese Meßwerte (wieder) gleichgerichtet werden, - wodurch sich ein Wert für die mittlere Temperatur, inklusive der Wärmetönungen, der Katalysatoreinheit ergibt..

Durch einen Lambda-Sensor geregelte Verbrennungsanlagen zeichnen sich dadurch aus, daß die Gemischzusammensetzung in einem möglichst engen Bereich optimiert wird. Der Lambda-Sensor sorgt dafür, daß das Luft-Kraftstoffverhältnis etwa im Bereich Lambda 0,98 bis Lambda 1,02 liegt. Dadurch wird die Verbrennung zwar optimiert, im Abgasstrom derartiger Verbrennungsanlagen sind aber dennoch Schadstoffe, wie Kohlenwasserstoffe, Kohlenmonoxid, Wasserstoff und Stickoxide, enthalten, die durch die Behandlung an einem Katalysator zu umweltverträglichen Substanzen umgesetzt werden müssen. Eine einfache Überwachung der Funktionsfähigkeit von derartigen Katalysatoren in Abgasreinigungsanlagen von beispielsweise Kraftfahrzeugen während des Fahrbetriebes, ist dadurch möglich, daß ein Wärmetönungssensor im Abgasstrom unmittelbar vor der Katalysatoreinheit oder im Einströmbereich der Katalysatorenheit angeordnet ist, der mit der gleichen katalytisch aktiven Beschichtung versehen ist, wie die Katalysatoreinheit selbst. Die Meßwerte des Wärmetönungssensors werden in zeitlichen Abständen, die der üblichen Regelfrequenz des Lambda-Sensors entspricht, erfaßt. Üblicherweise liegt die Lambda-Regelfrequenz bei 1 bis 3 Hertz. Die Regelung um Lamda 1 erlaubt die simultane Oxidation bzw. Reduktion von Kohlenwasserstoffen, Kohlenmonoxiden, Wasserstoffen (HC, CO, H₂) bzw. Stickoxiden (NOₓ). Sowohl die Reduktionsreaktion als auch die Oxidationsreaktion verlaufen exotherm. Die Wärmeentwicklung bei der Oxidationsreaktion (von HC, CO, H₂) ist allerdings signifikant größer als die bei der Reduktionsreaktion (von NOₓ). Diese stark unterschiedlichen Wärmetönungen können erfaßt werden, wenn in entsprechend kurzen Abständen das Meßsignal des Wärmetönungssensors, an dessen katalytisch aktiver Schicht die Reaktionen ebenso stattfinden wie am Katalysator selbst, aufgenommen werden. Die ermittelten Temperaturmeßwerte, aufgetragen über einer Zeitachse, stellen idealerweise eine Rechteckfunktion dar. Bei der praktischen Messung wird durch das thermische Zeitverhalten von realen Temperatursensoren, deren Ansprechzeit meist nicht sehr viel schneller als die Lambda-Regelfrequenz ist, die ideale Rechteckfunktion jedoch nicht immer scharf abgebildet, sondern zu einer stetigen Kurve "verschliffen". Bei Sensoren mit wesentich längerer Ansprechzeit als die der Lambda-Regelfrequenz, wird das Rechtecksignal zur Linie abgeflacht. Wobei die Höhe der Amplitude der Rechteckfunktion ein Maß ist für den Anteil an nichtumgesetzen Schadstoffen im Abgas. Ist der Katalysator voll funktionsfähig, so basiert die Wärmetönung zu 98 % auf der Oxidation von HC, CO und H₂ und zu 8 % auf der Reduktion von NOₓ. Mit geeigneten Auswerteverfahren kann aus der Höhe der Amplitude direkt auf den Anteil der jeweiligen Schadstoffgruppe geschlossen werden. Damit ergibt sich ein Kennwert über die katalytische Aktivität der Katalysatorbeschichtung.

Ein weiteres Kennzeichen der Funktionsfähigkeit eines Katalysators ist, wegen der Gefahr der Zerstörung des Katalysators durch Überhitzung, die thermische Belastung dieses Bauteils. Die Erfassung der absoluten Temperatur des Katalysators ist deshalb ebenso von Interesse. Mittels einer einfachen elektronischen Gleichrichtung der nach dem enfindungsgemäßen Verfahren ermittelten Meßwerte des Wärmetönungssensors kann daraus auch die mittlere Temperatur des Katalysators inklusive der auftretenden Wärmetönungen erfaßt werden. Ein zweiter Temperaturfühler, wie aus dem Stand der Technik bekannt, ist hierbei nicht erforderlich.

Die Unteransprüche betreffen vorteilhafte Weiterbildungen der Erfindung gemäß des Hauptanspruchs.

So hat es sich als zweckmäßig erwiesen, beispielsweise zum Nachtrimmen des Lambda-Sensor eine auf die Amplitude der Rechteckfunktion eingestellte Triggerschaltung zusätzlich zur Ermittlung von Lambda heranzuziehen.

Ein für die Durchführung des Verfahrens geeigneter Wärmetönungssensor ist vorteilhafterweise ein Widerstandssensor oder ein Thermoelement, wobei jeweils über der sensitiven Schicht die gleiche katalytisch aktive Beschichtung wie der Katalysator selbst aufgebracht ist. Es sind sowohl Widerstandssensoren mit negativen wie auch mit positiven Temperaturkoeffizienten geeignet.

Hinsichtlich besonders kurzer Ansprechzeiten hat es sich als vorteilhaft erwiesen, den Widerstandssensor besonders klein und mit geringer thermischer Masse zu konstruieren. Die sensitive Schicht des Wärmetönungssensors ist deshalb bevorzugt in Dünnschichttechnik auf einen dünnen Träger aufgebracht. Im Fall eines Widerstandssensors besteht die sensitive Schicht beispielsweise aus Platin. Wird diese Platinschicht zudem auf einer dünnen, hochtemperaturfesten Membran aufgebracht, so entsteht ein Widerstandssensor mit extrem geringer thermischer Masse und damit sehr kurzen Ansprechzeiten. In einer weiteren Ausführungsform kann der Widerstand aber auch aus einem Feinstdraht aus Platin bestehen. In analoger Weise kann der Wärmetönungssensor auch als Dünnschicht-Thermoelement aufgebaut sein oder von zwei sehr dünnen Thermodrähten gebildet werden.

Vorteilhafterweise enthält die katalytisch aktive Beschichtung auf dem Wärmetönungssensor ein Platingruppenmetall, wie beispielsweise Platin, Rhodium, oder Palladium oder deren Verbindungen.

Die Erfindung wird durch folgendes Ausführungsbeispiel näher beschrieben.

Dabei zeigt
- Figur 1a, b, c, d:: den schematischen Aufbau eines Wärmetönungssensors;
- Figur 2:: schematische Darstellung des Einbaus eines Wärmetönungssensors in ein Gehäuse;
- Figur 3a, b, c:: eine Darstellung des Verlaufs der Meßwerte des Wärmetönungssensors über der Zeitachse und eine Darstellung des Verlaufs der Temperatur nach Gleichrichtung der Funktion.

Der Wärmetönungssensor 1 weist gemäß Figur 1a ein elektrisch isolierendes Substrat 2 aus Aluminiumoxid auf. Auf diesem Träger ist eine in Form eines Mäanders strukturierte Platinschicht 3 mit Zuleitungen und Kontaktfeldern 4 aufgebracht, die als elektrischer Widerstand mit positiven Temperaturkoeffizienten fungiert. Über der Platinschicht 3 ist unter Auslassung der Kontaktfelder 4 eine elektrisch isolierende Abdeckschicht 5 aus hochtemperaturfestem Glas oder Oxidabdeckung angeordnet. Darüber befindet sich die katalytisch aktive Beschichtung 6, die aus dem gleichen Material besteht, wie die katalytisch aktive Beschichtung der Katalysatoreinheit, beispielsweise aus einem "Washcoat'' auf Aluminiumoxid-Ceroxid-Basis mit einer Platin-Rhodium-Imprägnierung. Der elektrische Widerstand der Platinschicht 3 des Wärmetönungssensors 1 ändert sich mit der Temperatur, so daß exotherme Reaktionen, die an der katalytisch aktiven Beschichtung 6 des Sensors 1 (und in gleicher Weise an der katalytisch aktiven Beschichtung des Katalysators) ablaufen, mit hoher Empfindlichkeit registriert werden.

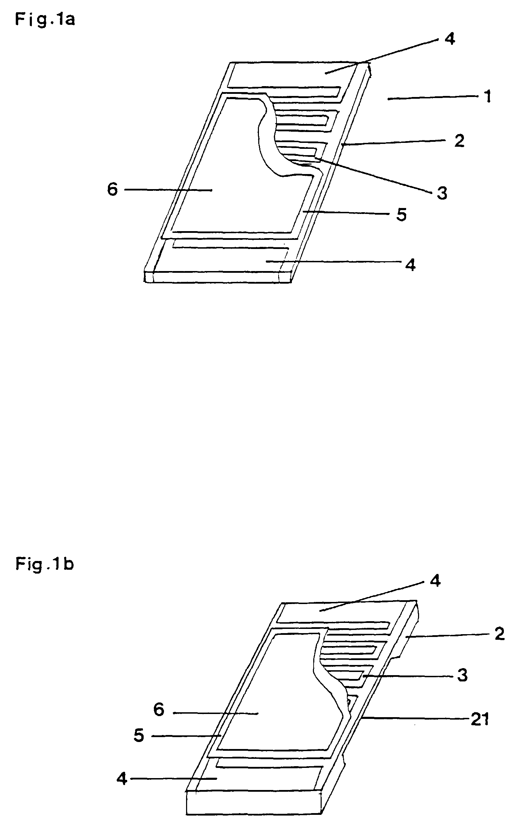

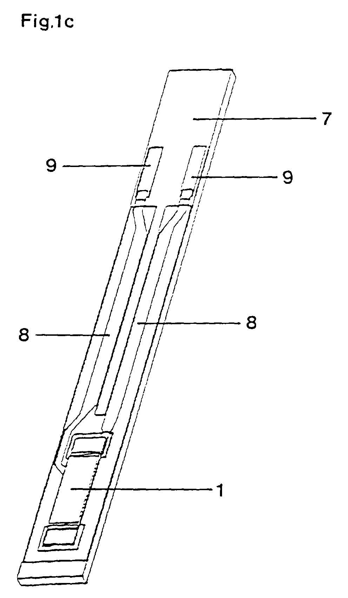

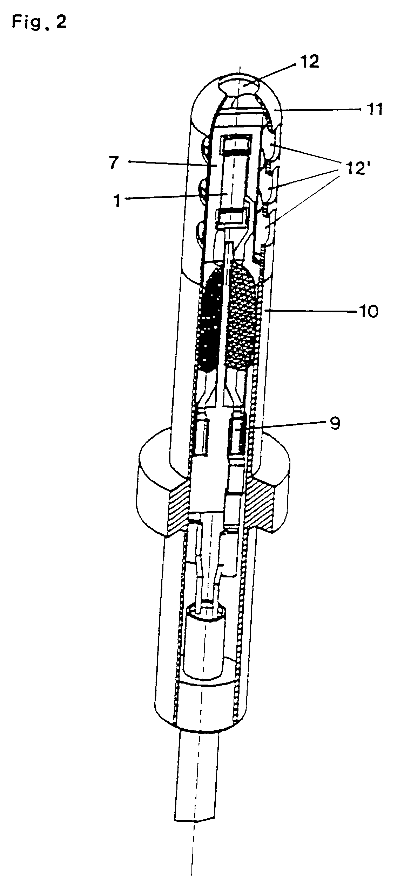

Figur 1b zeigt eine Ausführungsform mit sehr schneller Ansprechzeit; die funktionelle Platinschicht 3 mit entsprechender Abdeckschicht 5 und katalytisch aktiver Schicht 6 ist auf einer sehr dünnen (weniger Um) Membran 21 aufgebracht. Der Wärmetönungssensor 1 gemäß Figur 1a oder 1b wird in einer bevorzugten Ausführungsform auf ein Trägermodul 7 in SMD-Bauweise gefügt (siehe Figur 1c). Dieses Trägermodul 7 ist selbst auch aus hochtemperaturbeständigem, ausdehnungsangepaßtem Material (vorzugsweise Al₂O₃) und mit Versorgungsleiterbahnen 8 versehen. Diese enden in Anschlußpads 9, so daß ein Anschluß und eine Fügung in ein übliches Standardgehäuse (Figur 2) möglich ist.

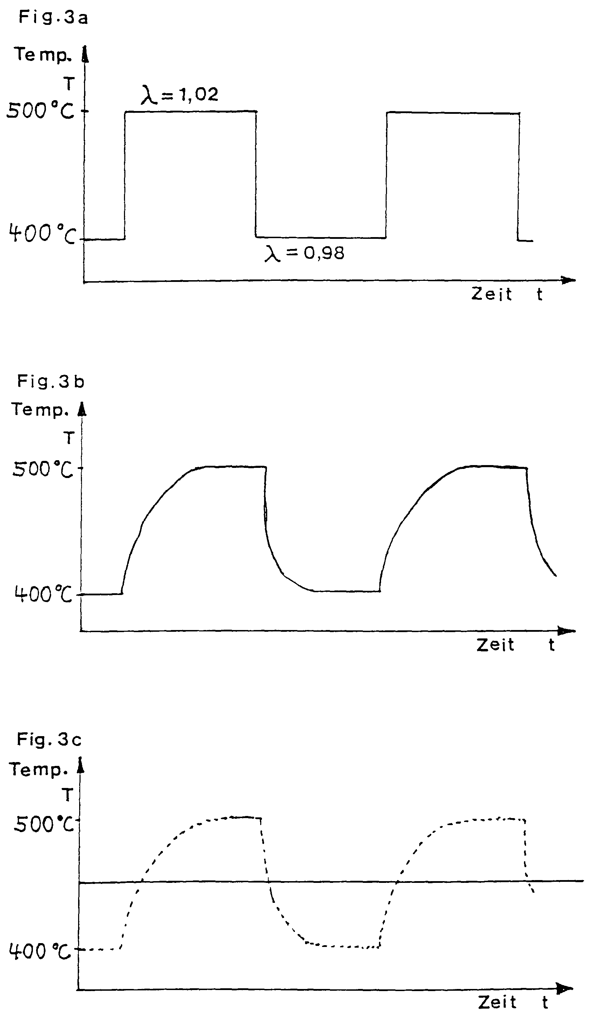

In Figur 2 ist der Einbau des Trägermoduls 7 mit dem Wärmetönungssensor 1 in ein Gehäuse 10 dargestellt, das in die Abgasleitung einer Verbrennungsanlage eingeschraubt werden kann. Die Schutzrohrspitze 11 des Gehäuses 10 besitzt eine Öffnung 12 an der Spitze und seitliche Perforierungen 12', so daß der Gaszutritt zum Wärmetönungssensor stattfinden kann. Der so gehäuste Sensor wird im Einströmbereich eines Katalysators einer Kraftfahrzeug-Abgasreingungsanlage mit lambda-gesteuerter Gemischregelung eingebaut. Lambda pendelt im Bereich 0,98 ("fettes" Gemisch) bis 1,02 ("mageres" Gemisch), wodurch eine katalytische Umsetzung von HC, CO, H₂ und NOₓ an der katalytisch aktiven Beschichtung 6 des Wärmetönungssensors 1 möglich wird. Die dabei entstehende Wärmetönung wird als Temperaturerhöhung vom Wärmetönungssensor 1 in Zeitabständen der Lambda-Regelfrequenz registriert und zeigt einen Verlauf gemäß Figur 3.

In Figur 3a ist ein idealisierter Verlauf der Meßwerte über der Zeit dargestellt; Figur 3b zeigt dagegen den Verlauf der Meßwerte bei einer realen Messung der Temperatur mit einem schnellen Temperatursensor.

Zur Ermittlung der absoluten, mittleren Temperatur am Katalysator, als weitere Kenngröße der Funktionsfähigkeit eines Katalysators, wird die Rechteckfunktion aus Figur 3b elektronisch gleichgerichtet. Es ergibt sich die Funktion gemäß Figur 3c, aus der die jeweilige Absoluttemperatur am Katalysator ablesbar ist.

## Patentansprüche

1. Verfahren zur Überwachung der Funktionsfähigkeit eines Katalysators für die Abgasreinigung einer durch einen Lambda-Sensor geregelten Verbrennungsanlage durch Temperaturmessung mit einem eine katalytisch aktive Beschichtung aufweisenden Wärmetönungssensor, wobei die Abgase an der katalytisch aktiven Beschichtung eine mit Wärmeentwicklung verbundene Umsetzung erfahren, dadurch gekennzeichnet, daß abwechsend erst die Meßwerte des Wärmetönungssensors, der im Abgasstrom im Einströmbereich der Katalysatoreinheit angeordnet ist und die gleiche katalytisch aktive Beschichtung aufweist wie die Katalysatoreinheit, in Zeitabständen entsprechend der Regelfrequenz des Lambda-Sensors aufgenommen werden, - wodurch sich eine eine Amplitude aufweisende Rechteckfunktion über der Zeitachse ergibt, wobei die Höhe der Amplitude ein Maß für den Anteil von nichtumgesetzten Kohlenwasserstoffen, Kohlenmonoxid und Wasserstoff im Abgas ist -, und anschließend diese Meßwerte gleichgerichtet werden, - wodurch sich ein Wert für die mittlere Temperatur, inklusive der Wärmetönungen, des Katalysators ergibt.

2. Verfahren nach Anspruch 1 , dadurch gekennzeichnet, daß mit Hilfe einer auf die Amplitude der Rechteckfunktion eingestellte Triggerschaltung eine zusätzliche Überwachung der Lambda-Werte im Abgas erfolgt.

3. Wärmetönungssensor zur Durchführung des Verfahren nach Anspruch 1 oder 2, dadurch gekennzeichnet, daß der Wärmetönungssensor ein Widerstandssensor oder ein Thermoelement ist, wobei der Widerstand oder das Thermoelement von einer katalytisch aktiven Beschichtung überdeckt wird, die der der Katalysatoreinheit entspricht.

4. Wärmetönungssensor nach Anspruch 3, dadurch gekennzeichnet, daß der Wärmetönungssensor ein Widerstandssensor mit einem negativen oder positiven Temperaturkoeffizienten ist.

5. Wärmetönungssensor nach Anspruch 3, dadurch gekennzeichnet, daß die katalytisch aktive Beschichtung ein Platingruppenmetall enthält.
